(19) Europäisches Patentamt
European Patent Office
Office européen des brevets

(11) **EP 3 056 889 A1**

(12) **EUROPÄISCHE PATENTANMELDUNG**

(43) Veröffentlichungstag:
**17.08.2016 Patentblatt 2016/33**

(51) Int Cl.:
***G01M 13/02*** *(2006.01)*

(21) Anmeldenummer: **16153661.0**

(22) Anmeldetag: **01.02.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **11.02.2015 DE 102015101972**

(71) Anmelder: **Wittenstein AG**
**97999 Igersheim (DE)**

(72) Erfinder: **Isabey, Philippe Dr.**
**97990 Weikersheim (DE)**

(74) Vertreter: **Zimmermann & Partner**
**Patentanwälte mbB**
**Josephspitalstr. 15**
**80331 München (DE)**

(54) **VERFAHREN UND VORRICHTUNG ZUR ÜBERWACHUNG EINER EINRICHTUNG EINES ANTRIEBS**

(57)    Es werden ein Verfahren und eine Vorrichtung zur Überwachung einer Einrichtung eines Antriebs angegeben. Mit dem Ziel, das Anwendungsspektrum der Überwachung des Antriebs zu verbessern, sieht die erfindungsgemäße Lösung vor, dass die Einrichtung ein drehbar gelagertes Rotationselement (10) aufweist, und dass ein an dem Rotationselement (10) angeordneter Detektor (30) zum Detektieren von Körperschall als ein Detektionssignal vorgesehen ist, wobei eine Auswertung des Detektionssignals durchgeführt wird, indem ein körperschallbeaufschlagungsfreier Signalanteil aus dem Detektionssignal extrahiert und mit einer Vergleichsgröße verglichen wird. Anhand des Vergleichs wird festgestellt, ob eine Beeinträchtigung des Antriebs vorliegt.

Fig. 1

EP 3 056 889 A1

**Beschreibung**

Gebiet der Erfindung

Die vorliegende Erfindung betrifft ein Verfahren zur Überwachung einer Einrichtung eines Antriebs sowie eine Vorrichtung zur Überwachung einer Einrichtung eines Antriebs.

Stand der Technik

Aus dem Stand der Technik sind Vorrichtungen und Verfahren bekannt, mit deren Hilfe auf den Abnutzungs- bzw. Beschädigungszustand von Teilen eines Antriebssystems geschlossen werden soll. Aus der US 2011/0142621 A1 ist ein System bekannt, bei welchem Bauteile einer akustischen Prüfung unterzogen werden, indem mittels eines Schallgebers zunächst eine Schallbeaufschlagung eines zu untersuchenden Bauteils erfolgt. Ein mittels eines zugehörigen Sensors gemessenes Schallsignal kann Rückschlüsse auf den mechanischen Zustand des Bauteils erlauben.

Offenbarung der Erfindung

Der Erfindung liegt die Aufgabe zugrunde, ein verbessertes Verfahren oder eine verbesserte Vorrichtung zur Überwachung einer Einrichtung eines Antriebs, beispielsweise eines Motors oder eines Getriebes, anzugeben. Insbesondere sollte das Anwendungsspektrum der Überwachung gegenüber den herkömmlichen Lösungen mit möglichst einfachen Mitteln verbessert werden.

Die Aufgabe wird gelöst durch ein Verfahren zur Überwachung einer Einrichtung eines Antriebs gemäß Anspruch 1 sowie durch eine Vorrichtung zur Überwachung einer Einrichtung eines Antriebs gemäß dem nebengeordneten Anspruch.

Gemäß einem Aspekt der Erfindung wird ein Verfahren bereitgestellt zur Überwachung einer Einrichtung eines Antriebs, wobei die Einrichtung ein drehbar gelagertes Rotationselement mit einem daran angeordneten Detektor zum Detektieren von Körperschall als ein Detektionssignal aufweist; mit Extrahieren eines beaufschlagungsfreien Signalanteils aus dem Detektionssignal; Vergleichen des extrahierten Signalanteils mit einer Vergleichsgröße; und Feststellen, anhand des Vergleichs, ob eine Beeinträchtigung des mechanischen Systems vorliegt.

Gemäß einem weiteren Aspekt betrifft die Erfindung eine Vorrichtung zur Überwachung einer Einrichtung eines Antriebs, wobei die Einrichtung ein drehbar gelagertes Rotationselement aufweist, mit einem an dem Rotationselement angeordneten Detektor zum Detektieren von passivem Körperschall als ein Detektionssignal; und einer Auswertungseinrichtung zum Durchführen eines der hierin beschriebenen typischen Verfahren, wobei die Auswertungseinrichtung mit dem Detektor zur Signalübertragung verbunden ist.

Bei typischen Verfahren wird ein beaufschlagungsfreier Signalanteil extrahiert. Das Verfahren ist bezogen auf das Körperschallsignal typischerweise als passives Verfahren vorgesehen. Es erfolgt typischerweise keine absichtliche oder externe Beaufschlagung der zu überwachenden Einrichtung mit Schall, z.B. einem Prüf-Schallsignal. Der untersuchte Signalanteil entsteht typischerweise allein durch die Schallanregungen der zu überwachenden Einrichtungen. Bei typischen Ausführungsformen entsteht der untersuchte Signalanteil alleine infolge des regulären Betriebs der Einrichtung des Antriebs.

Typische Ausführungsformen bieten den Vorteil, dass eine aktive Schallbeaufschlagung nicht zwingend benötigt wird. Typische Ausführungsformen bieten den Vorteil, dass das Verfahren zur Überwachung einer Einrichtung eines Antriebs während des Betriebs der Einrichtung des Antriebs durchgeführt werden kann. Typische Ausführungsformen weisen keine Schallbeaufschlagungseinrichtung auf.

Beim Extrahieren wird das Detektionssignal typischerweise auf mindestens einen vorab festgelegten Frequenzbereich beschränkt. Das Extrahieren kann hierzu beispielsweise eine Filterung, insbesondere Bandpassfilterung oder Mittelwertfilterung, umfassen, die das Detektionssignal auf einen Frequenzbereich beschränkt. Bei Ausführungsformen ist eine Integraltransformation in den Frequenzbereich möglich, wonach eine Auswahl der interessierenden Frequenzen erfolgt. Bei weiteren typischen Verfahren werden mehrere, bspw. zwei oder drei oder mehr, nicht zusammenhängende Unterfrequenzbereiche innerhalb eines größeren Frequenzbereiches für die Auswertung extrahiert. Hierdurch können beispielsweise Frequenzen bei der Auswertung unberücksichtigt bleiben, die einer nicht interessierenden Größe - z. B. einer Störgröße - zugeordnet werden.

Da die Detektionssignale Körperschallsignale sind, hat gemäß einem Aspekt der Erfindung der vorab festgelegte Frequenzbereich, der wie oben erwähnt ggf. in nicht zusammenhängende Unterfrequenzbereiche aufgeteilt ist, eine Untergrenze von 20 kHz. Alternativ oder zusätzlich hat der vorab festgelegte Frequenzbereich eine Obergrenze von 2 MHz. Bevorzugt hat der vorab festgelegte Frequenzbereich eine Untergrenze von 50 kHz oder 100 kHz. Alternativ oder zusätzlich hat der vorab festgelegte Frequenzbereich bevorzugt eine Obergrenze von 1 MHz oder 300 kHz.

Gemäß einem Aspekt ist im Zuge des Vergleichs des extrahierten Signalanteils mit der Vergleichsgröße eine Dezimierung der Daten vorgesehen, z. B. durch Effektivwertbildung des Detektionssignals oder ein statistisches Verfahren, z. B. Ermitteln der Kurtosis. In einem Fall wird jedes Schallemissionssignal, das sich innerhalb des zu untersuchenden Frequenzbereichs befindet und einen bestimmten Schwellenwert überschreitet, als sogenanntes Schallereignis betrachtet. Derartige Schallereignisse sind relativ steilflankig und können im untersuchten Frequenzspektrum als frequenzselektive Peaks erkennbar sein, d. h. als Signalpegel, welche deutlich die Pegel der zum untersuchten Zeitpunkt oder im untersuchten Zeitintervall benachbarten Frequenzen überschreiten. Im Zeitbereich, ggf. auch im Zeitbereich nach einer vorab durchgeführten frequenzabhängigen Filterung, können sich solche Schallereignisse als zeitselektive Peaks zeigen, d. h. als Signalpegel, welche deutlich den Pegel zu den im Zeitverlauf gesehen benachbarten Zeitpunkten oder Zeitintervallen überschreiten.

Zur Untersuchung des Signals kann das Signal in Zeitintervalle geteilt werden. Typischerweise ist ein untersuchtes Zeitintervall mindestens so lange wie ein Schallereignis, beispielsweise mindestens 1 s oder mindestens 500 ms oder mindestens 100 ms. Typischerweise ist die Zeitdauer des Schallereignisses diejenige Zeit, die die Einhüllende des Signals größer als ein vorgegebener Schwellwert ist. Typischerweise wird die Untersuchung fortlaufend wiederholt. Typischerweise werden nach Abschluss einer Untersuchung des extrahierten Signalanteils in einem Zeitintervall weitere Untersuchungen des extrahierten Signalanteils in nachfolgenden Zeitintervallen durchgeführt. Die jeweiligen untersuchten Zeitintervalle können gleich lang oder verschieden lang sein.

Bei Ausführungsformen wird das extrahierte Signal im untersuchten Zeitintervall auf das Vorliegen von frequenzselektiven Peaks untersucht. Bei Ausführungsformen wird das extrahierte Signal im untersuchten Zeitintervall auf das Vorliegen von zeitselektiven Peaks untersucht.

Typischerweise überschreitet ein frequenzselektiver Peak die Pegel im Bereich von mindestens $\pm 50\%$ oder mindestens $\pm 30\%$ oder mindestens $\pm 10\%$ um die Peakfrequenz deutlich. Bei einer deutlichen Überschreitung liegt die Amplitude des frequenzselektiven Peaks typischerweise um mindestens 50% oder um mindestens 30% oder um mindestens 10% höher als die Amplitude der weiteren Frequenzanteile.

Typischerweise überschreitet ein zeitselektiver Peak die Pegel von mindestens 50% oder von mindestens 30% oder von mindestens 10% der gemittelten Pegel des untersuchten Zeitintervalls deutlich. Bei einer deutlichen Überschreitung liegt die Amplitude des zeitselektiven Peaks typischerweise um mindestens 50% oder um mindestens 30% oder um mindestens 10% höher als die Amplitude des Pegels im weiteren Signalverlauf des untersuchten Zeitintervalls. Bei Ausführungsformen liegt bei einer deutlichen Überschreitung die Amplitude des zeitselektiven Peaks typischerweise um mindestens 50% oder um mindestens 30% oder um mindestens 10% höher als die Amplitude des gemittelten Pegels von mindestens zwei untersuchten Zeitintervallen.

Typischerweise ist ein Schallereignis steilflankig, wenn die steigende Flanke oder die fallende Flanke des extrahierten Schallsignals folgende Ungleichung erfüllt:

$$\Delta t \leq \frac{C}{B}$$

$\Delta t$ bezeichnet das zeitliche Intervall der steigenden Flanke oder der fallenden Flanke. B bezeichnet die Bandbreite des anregenden Signals und/oder die Bandbreite des Übertragungsmediums, z. B. der Übertragungsstrecke. C ist eine Konstante und wird typischerweise als ein Wert zwischen 0,2 und 0,5 gewählt. Bei typischen Ausführungsformen ist C = 0,35. Wenn die Bandbreite B des anregenden Signals und der Übertragungsstrecke beispielsweise 100 kHz beträgt, dann ist das Schallereignis steilflankig, wenn die steigenden Flanke oder die fallende Flanke des extrahierten Schallsignals in einem Zeitintervall von 3,5 $\mu$s oder weniger liegt.

Bei Ausführungsformen ist ein Schallereignis steilflankig, wenn die steigende oder fallende Flanke des extrahierten Schallsignals eine Anstiegszeit oder eine Abfallzeit von maximal 50 $\mu$s oder von maximal 5 $\mu$s oder von maximal 0,5 $\mu$s aufweist. Bei Ausführungsformen wird im extrahierten Schallsignal die Steilflankigkeit eines Überschwingvorgangs des extrahierten Schallsignals in positiver Signalrichtung oder in negativer Signalrichtung untersucht.

Gemäß einem Aspekt werden diese Schallereignisse gezählt. Bei typischen Ausführungsformen werden die Schallereignisse in festgelegten Zeitintervallen gezählt. Bei typischen Ausführungsformen kann die Länge der festgelegten Zeitintervalle während des Betriebs unverändert sein. Bei typischen Ausführungsformen kann die Länge der festgelegten Zeitintervalle während des Betriebs veränderbar sein, beispielsweise gemäß vorab festgelegten oder festlegbaren Untersuchungsmustern veränderbar sein. Ein vorab festgelegtes oder festlegbares Untersuchungsmuster kann z. B. eine periodische oder nichtperiodische Abfolge verschiedener festgelegter Zeitintervalle aufweisen. Eine Abfolge kann beispielsweise ein oder mehrere Zeitintervalle von mindestens 1 s Dauer und ein oder mehrere Zeitintervalle von mindestens 100 ms Dauer aufweisen. Bei einer fortlaufenden Auswertung erfolgt typischerweise eine zeitliche Mittelung des Detektionssignals. Bei typischen Ausführungsformen erfolgt eine Summierung der Ereignisse pro ausgewerteter Zeiteinheit, die z. B. der Abtastrate des Detektors oder bspw. einem durch einen Taktgeber generierten Rate entspricht. Eine Auswertung der zeitlichen Entwicklung dieser aufsummierten Ereignisse lässt typischerweise auf den Istzustand der überwachten Einrichtung des Antriebs schließen, woraus eine Prognose der Ausfälle des Antriebs bzw. der Einrichtung des Antriebs gegeben werden kann.

Gemäß einem Aspekt wird eine auf dem Signalanteil basierende Größe, d. h. eine auf dem aus dem Detektionssignal extrahierten beaufschlagungsfreien Signalanteil abgeleitete oder ableitbare Größe, auf ihren zeitlichen Verlauf bezogen. Die auf dem Signalanteil basierende Größe kann der extrahierte Signalanteil selbst sein. Typischerweise wird jeweils die Steigung der auf dem Signalanteil basierenden Größe für verschiedene Zeitintervalle ermittelt. Verschiedene Zeitintervalle sind Zeitintervalle, welche im Zeitverlauf zu verschiedenen Zeitpunkten beginnen oder enden. Die verschiedenen Zeitintervalle können von gleicher Dauer sein. Die verschiedenen Zeitintervalle können auch von unterschiedlicher oder teilweise unterschiedlicher Dauer sein.

Typischerweise werden die Steigungen, d. h. die während der verschiedenen Zeitintervalle jeweils für ein Zeitintervall ermittelten Steigungen, verglichen. Der Vergleich kann für die Feststellung verwendet werden, ob eine Beeinträchtigung des mechanischen Systems vorliegt.

Bei typischen Ausführungsformen werden die Zeitintervalle aus der Abtastfrequenz des Detektors abgeleitet. Typischerweise entsprechen die Zeitintervalle der Abtastfrequenz des Detektors. Alternativ wird der Takt für die Zeitintervalle ohne Bezug zu der Abtastfrequenz des Detektors erzeugt, bspw. von einem externen Taktgeber oder einem anderen, ohnehin vorhandenen Taktgeber.

Bei typischen Ausführungsformen wird der Signalanteil in den Zeitintervallen summiert, und die Summe wird auf den zeitlichen Verlauf bezogen. Bei Ausführungsformen ist dies die Summe der gezählten Schallereignisse, die auf ihren zeitlichen Verlauf bezogen wird.

Bei typischen Ausführungsformen wird die Steigung der auf dem Signalanteil basierenden Größe ermittelt. Hierbei ist der Ausdruck "Steigung" technisch zu interpretieren. Es wird also nicht notwendigerweise die Steigung im streng mathematischen Sinne ermittelt; vielmehr kann bei einer zeitdiskreten auf dem Signalanteil basierenden Größe diese Steigung näherungsweise durch Differenzbildung der Größe zu benachbarten Abtastzeitpunkten erfolgen.

Aus dem zeitlichen Verlauf dieser Steigung, beispielsweise aus einem "Knick", kann beim Vergleich festgestellt werden, ob eine Beeinträchtigung der Einrichtung des Antriebs oder anderer Komponenten des Antriebs vorliegt.

Bei typischen Ausführungsformen ist der Detektor an einem Bauteil des Antriebs angeordnet. Auf dieses Bauteil können antriebsbezogene Kräfte und/oder Momente einwirken. Dies kann eine genaue Überwachung gewährleisten. Beispiele für einen Antrieb sind ein Motor oder ein Getriebe. Es können weitere Arten von Antrieben oder Unterarten der oben genannten Beispiele vorgesehen sein. Beispielsweise kann ein Motor als ein Beispiel für einen Antrieb als Elektromotor, z. B. als Synchronmotor oder als Asynchronmotor oder als Servomotor ausgebildet sein. Der Motor kann auch als nicht-elektrisch angetriebener Motor ausgebildet sein, beispielsweise als hydraulisch betriebener Motor, als Radialkolbenmotor oder Axialkolbenmotor. Das Getriebe als Beispiel für einen Antrieb kann beispielsweise als Lineargetriebe oder als Planetengetriebe oder als Kettengetriebe ausgebildet sein, oder auch als hydrostatisches oder hydrodynamisches Getriebe. Beispiele für einen Antrieb sind auch Verbindungen aus einem Motor, beispielsweise einem der oben genannten Motortypen, mit einem Getriebe, beispielsweise einem der oben genannten Getriebetypen, z. B. ein Zahnstangenantrieb.

Die Auswertungseinrichtung ist bei typischen Ausführungsformen dazu ausgelegt, hierin beschriebene typische Verfahren durchzuführen, unter anderem einen beaufschlagungsfreien Signalanteil aus dem Detektionssignal zu extrahieren, den extrahierten Signalanteil mit einer Vergleichsgröße zu vergleichen und anhand des Vergleichs festzustellen, ob eine Beeinträchtigung des Antriebs vorliegt.

Gemäß einem weiteren Aspekt ist für die Verbindung zwischen dem Detektor und der Auswertungseinrichtung eine drahtlose Übermittlungseinrichtung vorgesehen. Diese drahtlose Übermittlungseinrichtung ist typischerweise an dem Rotationselement angeordnet und dient der Übermittlung eines auf dem Detektionssignal basierenden Übermittlungssignals. Mit der Auswertungseinrichtung ist wiederum eine feststehende drahtlose Empfangseinrichtung verbunden, welche zum Empfangen des Übermittlungssignals von der drahtlosen Übermittlungseinrichtung dient.

Das auf dem Detektionssignal basierende Übermittlungssignal ist bei Ausführungsformen das Detektionssignal selbst. Bei weiteren Ausführungsformen erfolgen Teile der hierin beschriebenen Verfahren bereits auf Seiten des Rotationselements, beispielsweise in Form einer Signal-Vorverarbeitung. Diese Teile können bei Ausführungsformen z. B. das Extrahieren des beaufschlagungsfreien Signalanteils aus dem Detektionssignal umfassen. Beispielsweise kann eine auf Seiten des Rotationselements durchgeführte Diskretisierung oder Modulation oder Filterung ergeben, dass sich ggf. vorhandenes Signalrauschen im Zuge des Übermitteins nicht verstärkt. Der Signal-/Rauschabstand kann typischerweise verbessert werden, wenn z. B. die Diskretisierung oder Modulation oder Filterung bereits auf Seiten des Rotationselements erfolgt.

Bei Ausführungsformen erfolgt der aufwendigere Teil des oben beschriebenen Verfahrens in der Auswertungseinrichtung, insbesondere also das Vergleichen oder das Feststellen. Die feststehende Auswertungseinrichtung eignet sich typischerweise dazu, die aufwendigen, beispielsweise rechen- und energieintensiven oder Platz einnehmenden, Bauteile hierin unterzubringen, während typischerweise der Detektor, der das Detektionssignal unmittelbar am Rotationselement erfassen kann, die dafür nötigen Bauteile aufweisen kann. Dies kann die Fehleranfälligkeit der Vorrichtung verringern, und es kann mögliche unerwünschte Auswirkungen auf den Antrieb verringern.

Durch die drahtlose Übermittlung des Detektionssignals von dem Rotationselement zur feststehenden Auswertungseinrichtung ist eine einfache Übermittlung der notwendigen Daten möglich, wobei gleichzeitig in dem Rotationselement nur wenige unterzubringende Bauteile zum Einsatz kommen müssen. Typische Ausführungsformen sind kostengünstig. Typischerweise ergibt sich eine gute Flexibilität bei der Auswahl der Stelle in der Signalkette, an der die drahtlose Übermittlung stattfindet.

Bei Ausführungsformen ist die Auswertungseinrichtung dazu ausgelegt, durch den Vergleich zu ermitteln, ob oder ob nicht eine Beschädigung oder Verschlechterung des mechanischen Systems bezogen auf die Vergleichsgröße vorliegt.

Mit anderen Worten: Die Auswertungseinrichtung bewertet bei Ausführungsformen anhand des Vergleichs den momentanen Zustand der überwachten Einrichtung des Antriebs. Anhand dessen kann auch eine Ausfallprognose der Einrichtung gegeben werden, die - im Gegensatz zu bekannten Vorgehensweisen wie z. B. der Schadensakkumulationsmethode - typischerweise den tatsächlichen Istzustand der Einrichtung nicht unberücksichtigt lässt.

Bei Ausführungsformen weist die drahtlose Übermittlungseinrichtung einen optischen Sender auf. Bei Ausführungsformen weist die drahtlose Empfangseinrichtung einen optischen Empfänger auf. Eine optische Signalübertragung kann für das Nutzsignal eine große Übertragungsbandbreite ermöglichen. Typischerweise ist der Störabstand bei einer optischen Signalübertragung groß.

Bei Ausführungsformen ist das Rotationselement ein Zahnrad, insbesondere ein Ritzel. Typischerweise ist die Einrichtung des Antriebs ein Ritzel-Zahnstange-Antrieb.

Bei Verwendung eines Ritzels wirkt dieses mit mindestens einer Zahnstange mechanisch zusammen, d. h. durch die mittels der Auswertungseinrichtung durchgeführte Auswertung wird das aus Ritzel und Zahnstange gebildete mechanische System bewertet. Herkömmliche Lösungen sehen oft eine Mehrzahl von Sensoren an den ortsfesten Elementen eines Antriebs vor, also an der Zahnstange bzw. an den Zahnstangen. Bei Ausführungsformen ist vorliegend gemäß dem beschriebenen Aspekt nur ein einziger Sensor im Rotationselement nötig, um die Einrichtung des Antriebs zu überwachen.

Bei Ausführungsformen weist der Detektor einen fixiert mit dem Rotationselement gekoppelten Körperschallsensor zum Aufnehmen eines Körperschallsignals auf. Die Übertragung des Körperschalls in den Körperschallsensor erfolgt im Wesentlichen unmittelbar und ohne wesentliche Dämpfung. Typischerweise ist eine Detektion mit hoher Empfindlichkeit und geringem Rauschanteil möglich. Typischerweise ist die Auswertungsgenauigkeit verbessert.

Bei Ausführungsformen weist der Detektor eine Signalverarbeitungsschaltung zum Verarbeiten des aufgenommenen Körperschallsignals auf. Durch eine hier erfolgende Signalverarbeitung kann das Detektionssignal vorab aufbereitetbeispielsweise vorgefiltert - werden.

Es kann auf die spezifischen Belange der drahtlosen Übermittlung angepasst werden, beispielsweise durch einen Modulationsvorgang oder dergleichen. Bei Ausführungsformen ist ein Teil der Auswertungsschaltung in die Signalverarbeitungsschaltung integriert. Im Hinblick auf eine mögliche Störanfälligkeit der drahtlosen Übertragungsstrecke können die Daten des Detektionssignals in dem integrierten Teil der Auswertungsschaltung gefiltert, verstärkt und/oder dezimiert werden.

Bei Ausführungsformen weist die Bewertungsvorrichtung einen feststehenden Sender zum drahtlosen Übertragen von Energie auf. Am Rotationselement ist ein Empfänger vorgesehen, der mit dem Detektor verbunden ist, die Energie von dem feststehenden Sender auf drahtlosem Wege empfängt und typischerweise den Detektor mit elektrischer Energie versorgt.

Mit anderen Worten: Bei Ausführungsformen ist eine Energieübertragungseinrichtung vorgesehen, deren Sender feststehend ist und mit Energie versorgt wird, und deren Empfänger an dem Rotationselement angeordnet ist und den Detektor mit Energie versorgt. Ebenso wie die Übertragung des Nutzsignals vom Rotationselement zur feststehenden Auswertungseinrichtung erfolgt typischerweise die Energieversorgung des Detektors und/oder benachbarter und ebenfalls rotierender Teile drahtlos.

Wenn die drahtlose Übermittlung über eine oben erwähnte optische Verbindung durchgeführt wird, bietet sich für die Energieübertragung eine induktive Übertragungsstrecke an. Diese beeinflusst die optische Übertragungsstrecke im Hinblick auf deren Störabstand kaum, ermöglicht aber eine effiziente Energieübertragung. Der Detektor benötigt keine eigene integrierte Energieversorgung, beispielsweise in Form einer Batterie oder dergleichen.

Bei einer möglichen ununterbrochen fortlaufenden, d. h. permanenten Energieversorgung des Detektors kann die Signalausgabe des Detektors selbst fortlaufend (d. h. zeitkontinuierlich oder zeitdiskret fortlaufend) betrieben werden. Typischerweise kann eine fortlaufende Auswertung des Detektionssignals in der Auswertungseinrichtung vorgenommen werden. Typischerweise erfolgt eine Speicherung der Energie und/oder des Auswerteergebnisses und/oder eines Betrachtungsintervalls.

Kurze Beschreibung der Zeichnungen

Weitere Vorteile und Merkmale bevorzugter Ausführungsformen der Erfindung werden nachfolgend anhand der beiliegenden Zeichnungen erläutert.

In den Zeichnungen zeigen:

Fig. 1 eine schematische seitliche Schnittansicht einer erfindungsgemäßen Vorrichtung gemäß einer Ausführungsform der Erfindung;

Fig. 2 eine schematische Ansicht auf eine Ritzel-Zahnstangen-Anordnung, bei welcher die Vorrichtung gemäß der Ausführungsform zum Einsatz kommt; und

Fig. 3    ein beispielhaftes Diagramm von ausgewerteten Sensor-Messdaten zum Erläutern der erfindungsgemäßen Vorrichtung und des erfindungsgemäßen Verfahrens gemäß der Ausführungsform.

Beschreibung bevorzugter Ausführungsformen

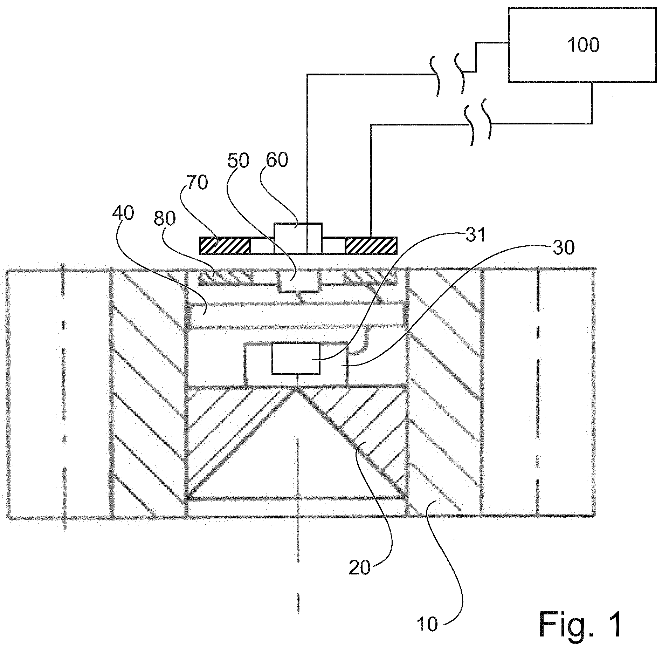

Fig. 1 zeigt eine schematische seitliche Schnittansicht einer erfindungsgemäßen Vorrichtung gemäß einer Ausführungsform der Erfindung.

In Fig. 1 ist ein Teil einer zu überwachenden Einrichtung eines Antriebs gezeigt, bei dem Ausführungsbeispiel der Fig. 1 ist dies ein Rotationselement 10 in Form eines Ritzels, das im Betrieb mit einer (in Fig. 1 nicht dargestellten) Zahnstange in Eingriff steht.

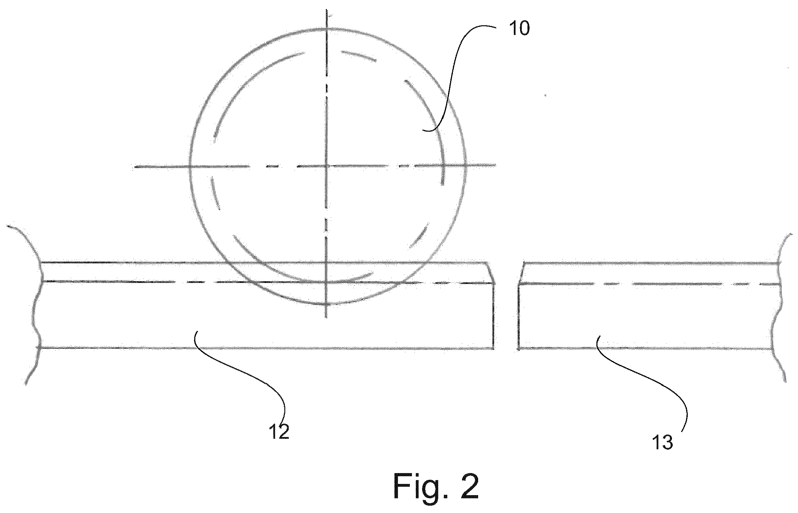

Wie aus der Darstellung in Fig. 2 näher ersichtlich ist, steht das Ritzel als Rotationselement 10 mit einer Zahnstangenanordnung aus einer ersten Zahnstange 12 und einer sich an diese anschließenden zweiten Zahnstange 13 in mechanischer Wirkverbindung.

Unter erneuter Bezugnahme auf Fig. 1 ist zu erkennen, dass das Rotationselement 10 gegenüber einer unten noch beschriebenen Auswertungseinrichtung 100 und einer ebenfalls unten beschriebenen drahtlosen Empfangseinrichtung 60 sowie ggf. gegenüber nicht dargestellten weiteren feststehenden Elementen drehbar gelagert ist. Hierbei ist "feststehend" als relativer Bezug zu dem Rotationselement 10 zu verstehen, d. h. das betreffende feststehende Element kann - z. B. bezogen auf eine den Antrieb aufnehmende Vorrichtung - durchaus relativ hierzu beweglich sein.

In einem Detektorsitz 20 ist innerhalb des Rotationselements 10 ein Detektor 30 aufgenommen, welcher dazu ausgebildet ist, ein Körperschallsignal zu detektieren und dieses als Signalgröße in Form eines Detektionssignals einer ebenfalls in dem Rotationselement 10 angeordneten Signalverarbeitungsschaltung 40 zuzuführen. Der Detektor 30 ist mittels des Detektorsitzes 20 an dem Rotationselement 10 mechanisch fixiert, so dass über das Rotationselement 10 ein Körperschallsignal, d. h. ein sich in dem Rotationselement 10 ausbreitendes Schallsignal, unmittelbar detektiert werden kann.

Die interessierenden Körperschallsignale (Acoustic Emission, "AE") weisen einen im Wesentlichen impulsförmigen Anregungsverlauf auf und treten auf, wenn in einem mechanischen System - so z. B. in dem Antrieb - Ereignisse auftreten, die eine Beeinträchtigung des Systemzustandes zur Folge haben, wie z. B. Rissbildungen vor einem Ermüdungsbruch. Es ist dadurch auch möglich, mit der erfindungsgemäßen Vorrichtung bzw. dem erfindungsgemäßen Verfahren bei sonst schwierig zu detektierenden Fehlerursachen eine genaue Überwachung der Einrichtung des Antriebs zu erzielen, beispielsweise im Falle einer mangelhaften Schmierung zwischen einem Ritzel und einer Zahnstange oder beim Auftreten harter Stäube, die z. B. in Laser-Bearbeitungsmaschinen entstehen.

In dem Ausführungsbeispiel gemäß Fig. 1 ist gezeigt: Das Detektionssignal soll nach erfolgter Vorab-Filterung und Glättung des Detektionssignals in der Signalverarbeitungsschaltung 40 nun ausgewertet werden. Es ist vorgesehen, das aus dem Detektionssignal so abgeleitete Übertragungssignal mittels einer drahtlosen Übermittlungseinrichtung 50 an die oben genannte und auf der ortsfesten Seite angeordnete, drahtlose Empfangseinrichtung 60 zu übertragen. Die drahtlose Empfangseinrichtung 60 steht relativ zu dem Rotationselement 10 fest. Diese führt das Übermittlungssignal ihrerseits drahtgebunden oder drahtlos der oben erwähnten Auswertungseinrichtung 100 zu.

Die Auswertungseinrichtung 100 wertet nun das ihr so übermittelte Signal aus, indem sie aus diesem einen Signalanteil extrahiert und mit einer Vergleichsgröße vergleicht.

Die Extraktion - bspw. eine Filterung - kann auch schon in weiten Teilen von der Signalverarbeitungsschaltung 40 übernommen worden sein. Es wird ein für das System und dessen mögliche Beschädigungsarten charakteristischer Signalanteil untersucht. Beispielsweise wird ein bestimmter vorab festgelegter Frequenzbereich innerhalb desjenigen Bereichs untersucht, in welchem sich ein Körperschallsignal ausbreiten kann. Ein möglicher vorab festgelegter Frequenzbereich hat hierbei eine Untergrenze von 20 kHz oder 50 kHz oder 100 kHz. Alternativ oder zusätzlich hat er eine Obergrenze von 300 kHz oder 1 MHz oder 2 MHz.

Hinsichtlich der Beschaffenheit des Detektors sind hier z. B. zeitkontinuierlich und wertkontinuierlich arbeitende (analoge) Detektoren, zeitdiskret und quantisiert arbeitende (digitale) Detektoren usw. möglich.

Die Auswertungseinrichtung 100 tastet das ihr zugeführte Detektionssignal ab und dezimiert nach der Extraktion die Daten mittels eines statistischen Verfahrens. Vorliegend werden die Schallereignisse, gezählt, summiert und der Zykluszahl des jeweiligen Zeitpunkts der Auswertung zugewiesen.

Schallereignisse sind jede Überschreitung eines (ggf. frequenzabhängigen) vorab festgelegten Amplitudenschwellwertes des Detektionssignals,

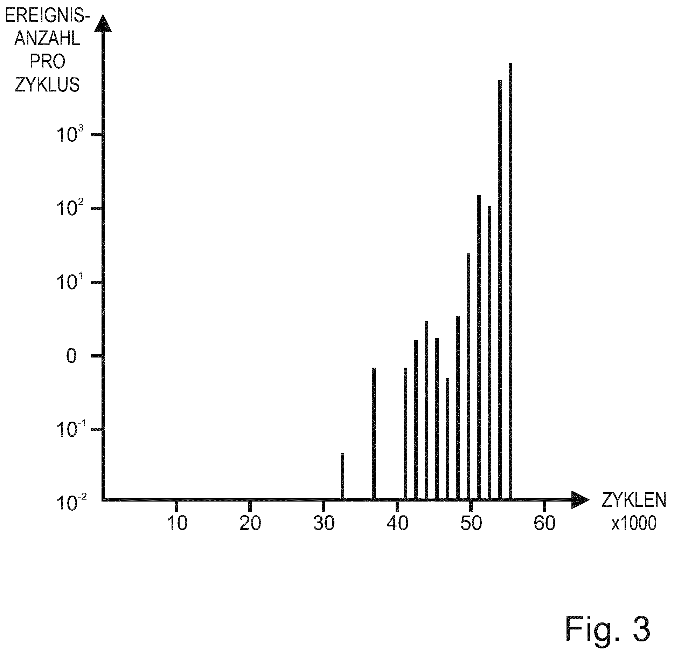

In dem beispielhaften Diagramm in Fig. 3 ist ein sich derart ergebendes Auswertungsdiagramm gezeigt. Sobald eine Zykluszahl von 50.000 Zyklen überschritten ist, nimmt in dem gezeigten Beispiel die Zahl der Schallereignisse pro Zyklus deutlich zu. Aus der Ereignishistorie leitet die Auswertungseinrichtung 100 eine Prognose für einen wahrscheinlichen Ausfallzeitpunkt ab.

In der vorliegenden Ausführungsform wird zu jedem untersuchten Zeitintervall die Steigung dieses Signalverlaufs ausgewertet. Da zeitdiskrete Werte untersucht werden, wird eine Näherung der Steigung durch Differenzbildung zeitlich benachbarter Signalwerte vorgenommen.

Sobald ein charakteristischer "Knick" im Verlauf der so erhaltenen Steigungskurve ermittelt wird, d. h. beispielsweise eine charakteristische Zunahme dieser Steigung, kann z. B. auf eine nennenswerte Beeinträchtigung des Antriebs geschlossen werden. Ein charakteristischer "Knick" kann als ein Bereich der Kurve interpretiert werden, in welchem die Steigung auch in vernünftiger Näherung nicht linear erfolgt, also der Signalverlauf nichtlinear zunimmt. Der "Knick" muss nicht notwendigerweise nicht-differenzierbar sein. Beispielsweise kann es für das Vorliegen eines charakteristischen "Knicks" ausreichen, wenn eine monoton steigende Funktion des Signals vorliegt, deren Steigung einen festgelegten oder festlegbaren Schwellenwert überschreitet. Der Schwellwert, ab dem ein solcher "Knick" angenommen werden kann, ist beispielsweise eine Änderung der Steigung um mehr als 25% in einem Betrachtungszeitraum von typischerweise mehreren Stunden. Die zeitliche Position des "Knicks" ist typischerweise unabhängig von bzw. robust gegenüber der Höhe der Signalamplitude.

Die Schwellenwerte können empirisch ermittelt worden sein. Der Detektor 30 ist im Rotationselement 10 angeordnet. Es kann auch auf den wahrscheinlichen Zeitpunkt des Ausfalls anderer Elemente geschlossen werden. Diese anderen Elemente unterscheiden sich von dem Rotationselement 10.

Das Rotationselement 10 ist mit der Zahnstange 12 bzw. 13 gekoppelt. Der Detektor ist in dem Rotationselement 10 angeordnet. Eine Überwachung, z. B. eine Lebensdauerüberwachung nicht nur von Einzelkomponenten des Antriebs, sondern auch von mehreren Antriebselementen ist möglich, und zwar mittels nur eines Detektors 30.

**Patentansprüche**

1. Verfahren zur Überwachung einer Einrichtung eines Antriebs, wobei die Einrichtung ein drehbar gelagertes Rotationselement (10) mit einem daran angeordneten Detektor (30) zum Detektieren von Körperschall als ein Detektionssignal aufweist, mit:

   - Extrahieren eines beaufschlagungsfreien Signalanteils aus dem Detektionssignal;
   - Vergleichen des extrahierten Signalanteils mit einer Vergleichsgröße; und
   - Feststellen, anhand des Vergleichs, ob eine Beeinträchtigung des mechanischen Systems vorliegt.

2. Verfahren nach Anspruch 1,
   ferner aufweisend:

   - Beschränken des Detektionssignals auf mindestens einen vorab festgelegten Frequenzbereich.

3. Verfahren nach einem der Ansprüche 1 oder 2,
   ferner aufweisend:

   - Beschränken des Detektionssignals auf einen Frequenzbereich mit einer Untergrenze von 20 kHz und/oder mit einer Obergrenze von 2 MHz.

4. Verfahren nach einem der Ansprüche 1 bis 3,
   wobei das Vergleichen folgendes aufweist:

   - Zählen von Überschreitungen des Signalanteils über einen vorab festgelegten Schwellenwert.

5. Verfahren nach einem der Ansprüche 1 bis 4, mit:

   - Beziehen einer auf dem Signalanteil basierenden Größe auf ihren zeitlichen Verlauf; und
   - Ermitteln jeweils der Steigung der auf dem Signalanteil basierenden Größe für verschiedene Zeitintervalle; und
   - Vergleich der Steigungen für die Feststellung, ob eine Beeinträchtigung des mechanischen Systems vorliegt.

6. Vorrichtung zur Überwachung einer Einrichtung eines Antriebs, wobei die Einrichtung ein drehbar gelagertes Rotationselement (10) aufweist, mit:

   - einem an dem Rotationselement (10) angeordneten Detektor (30) zum Detektieren von passivem Körperschall als ein Detektionssignal; und
   - einer Auswertungseinrichtung (100) zum Durchführen eines Verfahrens nach einem der Ansprüche 1 bis 5, wobei die Auswertungseinrichtung (100) mit dem Detektor (30) zur Signalübertragung verbunden ist.

7. Vorrichtung nach Anspruch 6,
   aufweisend:

   - eine an dem Rotationselement (10) angeordnete drahtlose Übermittlungseinrichtung (50) zur Übermittlung eines auf dem Detektionssignal basierenden Übermittlungssignals; und
   - eine mit der Auswertungseinrichtung (100) verbundene feststehende drahtlose Empfangseinrichtung (60) zum Empfangen des Übermittlungssignals von der drahtlosen Übermittlungseinrichtung (50).

8. Vorrichtung nach Anspruch 7,
   wobei die drahtlose Übermittlungseinrichtung (50) einen optischen Sender aufweist, und wobei die drahtlose Empfangseinrichtung (60) einen optischen Empfänger aufweist.

9. Vorrichtung nach einem der Ansprüche 6 bis 8,

wobei der Detektor (30) einen fixiert mit dem Rotationselement (10) gekoppelten Körperschallsensor (31) zum Aufnehmen eines Körperschallsignals aufweist.

10. Vorrichtung nach einem der Ansprüche 6 bis 9, wobei der Detektor (30) eine Signalverarbeitungsschaltung (40) zum Verarbeiten des aufgenommenen Körperschallsignals aufweist.

11. Vorrichtung nach einem der Ansprüche 6 bis 10, aufweisend:

- einen feststehenden Sender (70) zum drahtlosen Übertragen von Energie; und
- einen am Rotationselement (10) angeordneten Empfänger (80), der mit dem Detektor (30) verbunden ist, zum Empfangen der Energie von dem feststehenden Sender (70) und zum Versorgen zumindest des Detektors (30) mit elektrischer Energie.

Fig. 1

Fig. 2

EP 3 056 889 A1

Fig. 3

**Europäisches Patentamt**
**European Patent Office**
**Office européen des brevets**

# EUROPÄISCHER RECHERCHENBERICHT

**Nummer der Anmeldung**

EP 16 15 3661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Christian Scheer ET AL: "Early fault detection at gear units by acoustic emission and wavelet analysis", Journal of Acoustic Emission, 1. Januar 2007 (2007-01-01), Seite 331, XP055282821, Gefunden im Internet: URL:http://www.ndt.net/article/jae/papers/25-331.pdf [gefunden am 2016-06-22] | 1-7,9 | INV. G01M13/02 |
| Y | * Seite 333 - Seite 337 * * Abbildungen 1, 4 * | 8,11 | |
| X | EP 2 213 998 A2 (GEN ELECTRIC [US]) 4. August 2010 (2010-08-04) * Zusammenfassung * * Abbildungen 1-4 * * Absätze [0001] - [0006], [0011] - [0022], [0029] - [0034], [0042] - [0046] * | 1,4-7,10 | |
| X | US 2006/192508 A1 (ALBERS THOMAS [DE]) 31. August 2006 (2006-08-31) * Zusammenfasung * * Abbildungen 1, 2 * * Absätze [0001], [0009], [0021] - [0028] * | 1,6-11 | RECHERCHIERTE SACHGEBIETE (IPC) G01L G01M |
| X | US 4 550 603 A (FUKADA KOICHI [JP] ET AL) 5. November 1985 (1985-11-05) * Zusammenfassung * * Spalte 2, Zeile 35 - Spalte 5, Zeile 14 * | 1,2,4-6,10 | |

-/--

Der vorliegende Recherchenbericht wurde für alle Patentansprüche erstellt

| Recherchenort | Abschlußdatum der Recherche | Prüfer |
|---|---|---|
| Den Haag | 24. Juni 2016 | Schambach, Philip |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 16 15 3661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 034749 A1 (SCHAEFFLER TECHNOLOGIES GMBH [DE]) 23. Februar 2012 (2012-02-23) * Zusammenfassung * * Abbildungen 1, 2 * * Absätze [0013] - [0020], [0028] * ----- | 1,6,7,9, 10 | |
| X | US 2011/230304 A1 (MOREL HERVE [FR]) 22. September 2011 (2011-09-22) * Zusammenfassung * * Abbildungen 2, 3 * * Absätze [0010] - [0006], [0031] - [0040], [0052] - [0064] * ----- | 1,2,6,7, 9 | |
| X | EP 1 927 855 A1 (JTEKT CORP [JP]; MURAKAMI ISAO [JP]) 4. Juni 2008 (2008-06-04) * Zusammenfassung * * Abbildungen 2, 3, 5 * * Absätze [0006], [0007], [0019], [0022], [0032], [0036], [0037], [0050] - [5360], [0083], [0086] * ----- | 1-3,6,7, 9 | |
| A | WO 2009/109200 A1 (SKF AB [SE]; GRAF JENS [DE]; MORETTI ROBERTO [IT]; SEMA SILVANO [IT];) 11. September 2009 (2009-09-11) * Zusammenfassung * * Seite 2, Zeilen 13-28; Abbildungen 3, 7 * * Seite 3, Zeile 29 - Seite 4, Zeile 16 * * Seite 5, Zeile 18 - Seite 6, Zeile 27 * * Ansprüche 1, 4, 5, 7, 10, 11 * ----- | 8,10,11 | RECHERCHIERTE SACHGEBIETE (IPC) |
| Y | EP 0 992 620 A1 (MURATA MACHINERY LTD [JP]) 12. April 2000 (2000-04-12) * Zusammenfassung * * Abbildungen 1-3 * * Absätze [0003] - [0005], [0019], [0020] * ----- | 8,11 | |

Der vorliegende Recherchenbericht wurde für alle Patentansprüche erstellt

| Recherchenort | Abschlußdatum der Recherche | Prüfer |
|---|---|---|
| Den Haag | 24. Juni 2016 | Schambach, Philip |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 3661

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2016

| Im Recherchenbericht angeführtes Patentdokument | Datum der Veröffentlichung | Mitglied(er) der Patentfamilie | Datum der Veröffentlichung |
|---|---|---|---|
| EP 2213998 A2 | 04-08-2010 | AU 2010200349 A1<br>CA 2690669 A1<br>CN 101819090 A<br>EP 2213998 A2<br>JP 5603603 B2<br>JP 2010175073 A<br>US 2010198534 A1 | 19-08-2010<br>30-07-2010<br>01-09-2010<br>04-08-2010<br>08-10-2014<br>12-08-2010<br>05-08-2010 |
| US 2006192508 A1 | 31-08-2006 | DE 102005008586 A1<br>US 2006192508 A1 | 07-09-2006<br>31-08-2006 |
| US 4550603 A | 05-11-1985 | JP S59178357 A<br>US 4550603 A | 09-10-1984<br>05-11-1985 |
| DE 102010034749 A1 | 23-02-2012 | CN 103069258 A<br>DE 102010034749 A1<br>US 2013305827 A1<br>WO 2012022602 A1 | 24-04-2013<br>23-02-2012<br>21-11-2013<br>23-02-2012 |
| US 2011230304 A1 | 22-09-2011 | EP 2366989 A1<br>FR 2957668 A1<br>US 2011230304 A1 | 21-09-2011<br>23-09-2011<br>22-09-2011 |
| EP 1927855 A1 | 04-06-2008 | EP 1927855 A1<br>US 2009116775 A1<br>WO 2007034867 A1 | 04-06-2008<br>07-05-2009<br>29-03-2007 |
| WO 2009109200 A1 | 11-09-2009 | AU 2008352344 A1<br>CN 101960282 A<br>EP 2274591 A1<br>EP 2765402 A1<br>RU 2010140589 A<br>US 2011146409 A1<br>WO 2009109200 A1 | 11-09-2009<br>26-01-2011<br>19-01-2011<br>13-08-2014<br>10-04-2012<br>23-06-2011<br>11-09-2009 |
| EP 0992620 A1 | 12-04-2000 | EP 0992620 A1<br>JP 3701799 B2<br>JP 2000118864 A | 12-04-2000<br>05-10-2005<br>25-04-2000 |

EPO FORM P0461

Für nähere Einzelheiten zu diesem Anhang : siehe Amtsblatt des Europäischen Patentamts, Nr.12/82

EP 3 056 889 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110142621 A1